Europäisches Patentamt

European Patent Office

Office européen des brevets

(19)

(11) Veröffentlichungsnummer: **0 006 641**
**A2**

## (12) EUROPÄISCHE PATENTANMELDUNG

(21) Anmeldenummer: 79102267.6

(22) Anmeldetag: 04.07.79

(51) Int. Cl.³: **B 60 R 13/10,** C 03 C 15/00,
G 09 F 3/00, G 09 F 7/00

(30) Priorität: 05.07.78 DE 2829457

(43) Veröffentlichungstag der Anmeldung: 09.01.80
Patentblatt 80/1

(84) Benannte Vertragsstaaten: **BE CH FR GB NL SE**

(71) Anmelder: **Kodron, Rudolf S., Dipl. Ing., Adam-
Karrillon-Strasse 30, D-6500 Mainz (DE)**

(72) Erfinder: **Kodron, Rudolf S., Dipl. Ing., Adam-Karrillon-
Strasse 30, D-6500 Mainz (DE)**

(54) **Kennzeichnung von Kraftfahrzeugen.**

(57) Verfahren und Vorrichtungen zur diebstahlsicheren
Kennzeichnung von Kraftfahrzeugen durch Einätzen des
amtlichen Kennzeichens auf der Fahrzeugaußenseite, insbesondere der Windschutzscheibe, mittels einer Ätzpaste
oder Ätzflüssigkeit.

Die Einätzung kann durch bekannte chemische oder
physikalische Verfahren nicht mehr rückgängig gemacht
werden.

EP 0 006 641 A2

Die Erfindung bezieht sich auf die Kennzeichnung von Kraftfahrzeugen durch eine außer der üblichen Kennzeichnung vorgesehene Kennzeichnung mit der Buchstaben- und Zahlenkombination des dem Kraftfahrzeug zugeteilten amtlichen Kennzeichens
an der Karosserie und/oder den Scheiben des Kraftfahrzeugs.

Eine Kennzeichnung dieser Art geht aus der DE-PS 20 31 656
als bekannt hervor, wobei zur Erschwerung eines Kraftfahrzeugdiebstahls das Kraftfahrzeug mit einem zusätzlichen
Kennzeichenschild ausgestattet ist, das nur durch einen gesetzlich befugten Behördenpersonenkreis abgenommen werden darf,
der allein bestimmte, zum Abnehmen des dritten Kraftfahrzeugschildes erforderliche Maßnahmen und/oder Mittel kennt.
Dieser Vorschlag ist mit dem Nachteil behaftet, daß besondere
Verfahren und Personen erforderlich sind, um diese dritten
Kennzeichenschilder für den einzelnen Kraftfahrzeughalter herzustellen, da letzerer hierzu nicht in der Lage ist. Außerdem
bedarf die Verwirklichung dieses Vorschlags in jedem Staat
auch einer gesetzlichen Regelung, durch die der Kreis der zur
Abnahme des dritten Kennzeichenschildes befugten Behördenpersonen bestimmt ist. Schließlich ist die zeitlich unbegrenzte
Beachtung des Verbreitungsverbots der Kenntnis der besonderen
zum Abnehmen des dritten Kraftfahrzeugschildes erforderlichen
Maßnahmen und/oder Mittel vorzusehen, was praktisch unmöglich
erscheint.

Der Erfindung liegt demgegenüber die Aufgabe zugrunde, eine
zusätzliche Kennzeichnung zu ermöglichen, die ohne Verwendung
eines vorgefertigten Kennzeichenschilds auskommt und keinen
gesetzlich befugten Personenkreis mit besonderen geheimzuhaltenden Kenntnissen erfordert.

Gelöst wird diese Aufgabe nach der Erfindung dadurch, daß die
Buchstaben- und Zahlenkombination des zugeteilten amtlichen
Kennzeichens unmittelbar auf die Karosserie und/oder an die
Scheiben des Kraftfahrzeugs außenseitig mit einer an der Karos-

0006641

serie und/oder den Scheiben anhaftenden und diese chemisch mit bleibender Zerstörung angreifenden bzw. zersetzenden pastosen oder flüssigen Substanz aufgetragen wird.

Nachfolgend werden anhand der Zeichnung zwei unterschiedliche Anwendungsarten der Erfindung näher erläutert.

Es zeigt:

Fig. 1 : die Anwendung der Ätzpaste in freier Schreibweise und

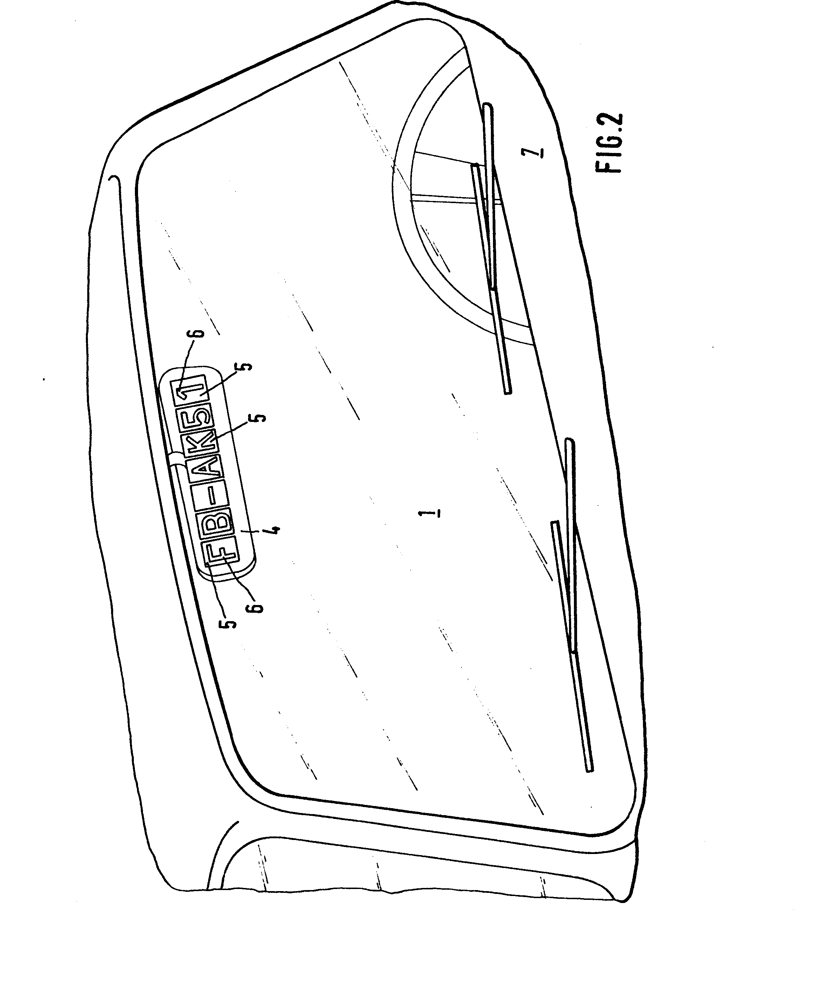

Fig. 2 : die Anwendung der Ätzpaste mit Hilfe von Buchstaben- und Zahlenschablonen.

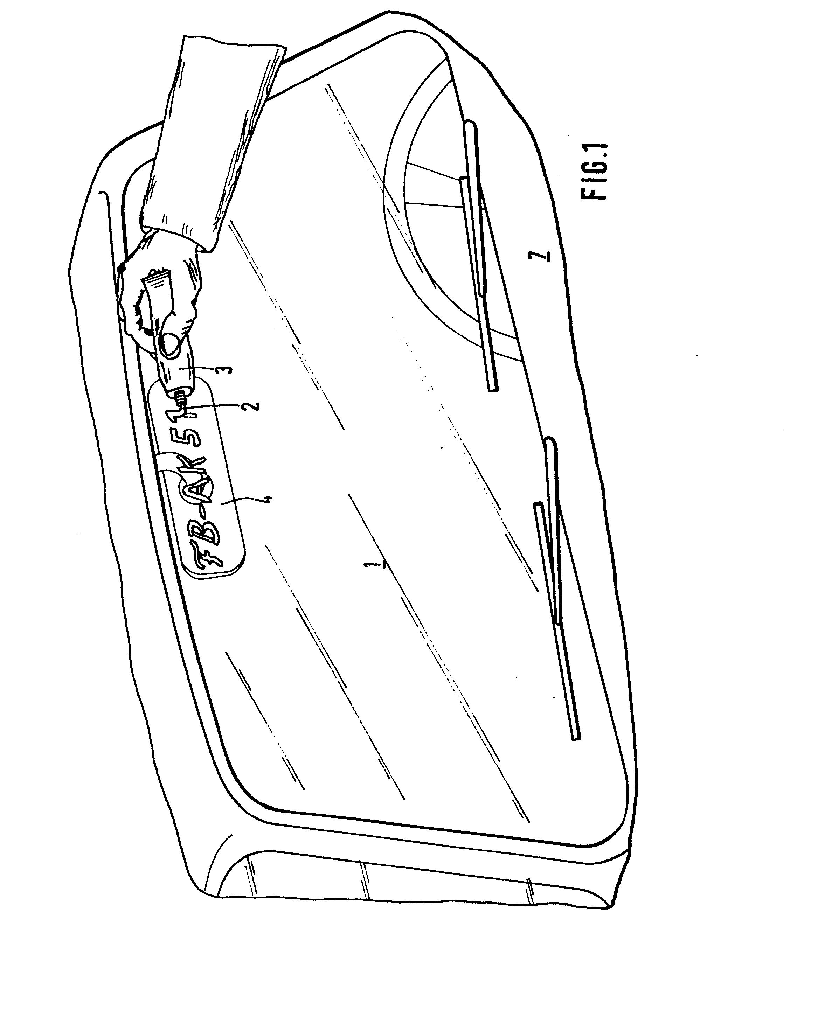

Bei dem in Fig. 1 gezeigten Anwendungsbeispiel wird die ätzende Paste 2 von Hand aus der Tube 3 auf der Aussenseite der Frontscheibe 1 eines Kraftfahrzeugs 7 in freier Schreibweise derart herausgequetscht, daß der herausgequetschte Tubenstrang das amtliche Kennzeichen bildet. Nach einer gewissen Zeit ist der Ätzvorgang beendet und schafft eine bleibende Trübung der Frontscheibe in Form des amtlichen Kennzeichens. Die übrig bleibenden Pastenreste können entweder von Hand entfernt oder durch eine Wäsche in der Autowaschanlage beseitigt werden.

Als besonders geeignete Verätzungsstelle bietet sich der mittlere obere Abschnitt der Frontscheibe an, der durch den mittleren Rückblickspiegel 4 des Kraftfahrzeugs ohnehin abgedeckt ist. Diese Stelle ist ausserdem von außen, insbesondere bei Kontrollen und an Grenzübergängen, besonders gut sichtbar.

Es leuchtet ein, daß ein Kraftfahrzeug, welches mit einer derartigen nicht zu beseitigenden dritten amtlichen Kennzeichnung ausgestattet ist, für Kraftfahrzeugdiebe viel weniger attraktiv ist als Kraftfahrzeuge, die nur die üblichen vorderen und hinteren Kennzeichenschilder besitzen. Jedem Kraftfahrzeugeigentümer wird mit der Erfindung ein einfaches Mittel an die Hand gegeben, die Gefahr von sich abzuwenden, daß er Opfer einer der bislang zahlenmäßig nicht einzudämmenden Autodiebstähle wird, von denen sich 60.000 jährlich allein in der Bundesrepublik Deutschland ereignen. Für derartig gesicherte Kraftfahrzeuge könnten auch verringerte Diebstahlversicherungsprämien von den Versicherungsanstalten gefordert werden.

Patentansprüche
----------------

1. Kennzeichnung von Kraftfahrzeugen durch eine außer der üblichen Kennzeichnung vorgesehene Kennzeichnung mit der Buchstaben- und Zahlenkombination des dem Kraftfahrzeug zugeteilten amtlichen Kennzeichens an der Karosserie und/oder den Scheiben des Kraftfahrzeuges, dadurch gekennzeichnet, daß die Buchstaben- und Zahlenkombination des zugeteilten amtlichen Kennzeichens unmittelbar auf die Karosserie und/oder an die Scheiben des Kraftfahrzeuges (7) außenseitig mit einer an der Karosserie und/oder den Scheiben anhaftenden und diese chemisch mit bleibender Zerstörung angreifenden bzw. zersetzenden pastosen oder flüssigen Substanz aufgetragen wird.

2. Kennzeichnung von Kraftfahrzeugen nach Anspruch 1, dadurch gekennzeichnet, daß durchbrochene Buchstaben- und Zahlenschablonen (5 und 6) verwendet werden, die vor Auftragung der ätzenden Substanz (2) auf die bleibend zu markierende Stelle der Karosserie oder der Scheibe in der der jeweiligen Buchstaben- und Zahlenkombination des amtlichen Kennzeichens entsprechenden Reihenfolge aufgelegt und nach der Ätzung entfernt werden.

3. Kennzeichnung von Kraftfahrzeugen nach Anspruch 1 oder 2, dadurch gekennzeichnet, daß zum unmittelbaren Auftragen der Buchstaben- und Zahlenkombination des amtlichen Kennzeichens auf die Außenseite einer Scheibe des Kraftfahrzeuges eine die Scheibe ätzende und undurchsichtig machende, in einer Tube (3) abgefüllte Paste (2) verwendet wird, die zum Auftragen der Buchstaben- und Zahlenkombination auf die Scheibe aus der Tube (3) herausgequetscht wird.

4. Kennzeichnung von Kraftfahrzeugen nach Anspruch 3, dadurch gekennzeichnet, daß die Paste (2) aus 50 Teilen $CaSO_4$ (Kalziumsulfat) als Verdichter, 10 Teilen KF (Kaliumfluorid) als Fluorlieferant und 40 Teilen $H_2SO_4$ (Schwefelsäure) zur Freisetzung von HF (Flußsäure) besteht.

FIG.1

FIG.2